# EUROPEAN PATENT APPLICATION

(11) **EP 3 832 259 A1**
(43) Date of publication of application: **09.06.2021**
(21) Application number: 19844660.1
(22) Date of filing: 18.02.2019
(51) Int. Cl.: G01C 15/00

(54) **THREE-DIMENSIONAL LASER-LIGHT-SCANNING DEVICE**

(30) Priority: 02.08.2018 JP 2018145803
(71) Applicant: Kumonos Corporation, Minoo-shi, Osaka 562-0035 (JP)
(72) Inventor: SHINOZUKA Yukio, Ueda-shi, Nagano 386-0498 (JP)
(74) Representative: Prinz & Partner mbB
(86) International application number: PCT/JP2019/005773
(87) International publication number: WO 2020/026477

(57) **Abstract**

An object is to provide a three-dimensional laser-light-scanning device that ensures safety to an ecosystem including human by not generating a high density region where laser-light irradiation density becomes high without lowering performance of laser-light ranging. As a solution, a control unit (6) controls a first drive unit (3) and a second drive unit (7) to change the direction in which laser light of a reflection mirror (2) is reflected and to control a laser-light-ranging device (1) to perform laser-light ranging, and hence the three-dimensional scanning range by laser-light irradiation is wide, and moreover, scanning is performed by reducing the frequency of laser-light irradiation in a predetermined scanning range with a latitude θ1 (0° ≤ θ1 ≤ 90°) of a virtual spherical surface (10) where laser-light ranging is performed as a parameter.

## Description

### TECHNICAL FIELD

The present disclosure relates to a three-dimensional laser-light-scanning device.

### BACKGROUND ART

Attempts have been made to acquire point cloud data by irradiating a three-dimensional space with laser light from a laser-light-ranging device. The point cloud data, which is a three-dimensional coordinate value group data, includes a representation of the shape of an object existing in the surrounding environment. As a prior technology, a method such as the technology disclosed in, for example, JP 2017-134293 A (See Patent Document 1) is known.

### PRIOR ART DOCUMENT

### PATENT DOCUMENT

Patent Document 1: JP 2017-134293 A

### SUMMARY OF THE INVENTION

### PROBLEMS TO BE SOLVED BY THE INVENTION

Equipment using laser light such as a laser-light-ranging device is classified according to safety standards, and can perform versatile laser-light ranging that can be safely used even in a space where many and unspecified people exist by using laser light within the range of Class 1 and Class 2 that do not require protective measures. However, there is also a market demand for a ranging performance for longer distances and a more accurate ranging performance.

In order to satisfy these requirements, it is necessary to increase the laser-light output, and it is impossible to secure the necessary laser-light ranging performance only by considering the safety.

The three-dimensional laser-light-scanning device disclosed in Patent Document 1 has a problem that the density of the irradiated laser light increases in a region near immediately above the scanning device. More specifically, in a case where a transparent sphere of an any radius exists virtually around the three-dimensional laser-light-scanning device, the energy per unit area when the ranging laser light is irradiated on the surface of this sphere (hereinafter referred to as a "virtual spherical surface") is not uniform, and there is a characteristic that a region with a higher latitude of the virtual spherical surface (nearer the north pole) is also higher in the energy per unit area. The safety of laser light irradiation to a human is judged by the energy per unit area when the laser light is irradiated. When there is a region where the laser-light irradiation density becomes high (high energy irradiation density region), it is necessary to reduce the laser-light irradiation energy per unit area in the high irradiation density region from the viewpoint of securing safety, and for this purpose, the output of the laser-light emitting device for ranging is reduced, resulting in reduction in the performance such as distance in which laser-light ranging is possible and accuracy of laser-light ranging.

### MEANS FOR SOLVING THE PROBLEMS

The present disclosure has been made to solve these problems, and its object is to provide a three-dimensional laser-light-scanning device having higher safety by reducing the laser-light irradiation energy density in a high-density region where the laser-light irradiation density becomes high without reducing the performance of laser-light ranging.

In order to achieve the above object, the following embodiments include the following configuration.

A three-dimensional laser-light-scanning device, including a laser-light-ranging device that performs ranging by irradiating laser light and receiving reflected light, a reflection mirror that reflects laser light irradiated from the laser-light-ranging device on a reflection surface, irradiates the laser light toward an irradiated object, reflects reflected light from an irradiated object on the reflection surface, and receives the reflected light, a first drive unit that rotationally drives the reflection mirror about a horizontal rotation axis, a rotation support unit that supports and fixes the laser-light-ranging device and the first drive unit, a second drive unit that rotationally drives the rotation support unit about a vertical axis, and a control unit that integrally controls the laser-light-ranging device, the first drive unit, and the second drive unit, in which by driving and controlling the first drive unit and the second drive unit to change a direction in which laser light of the reflection mirror is reflected, and causing the laser-light-ranging device to perform laser-light ranging, the control unit controls the laser-light-ranging device so as to cause that the laser-light-ranging device to perform, in a certain pattern, laser-light ranging on a virtual spherical surface of a virtual sphere of an any radius about the reflection mirror, and to reduce a frequency of laser-light irradiation in a predetermined scanning range and perform scanning with a latitude θ1 (0° ≤ θ1 ≤ 90°) of the virtual spherical surface where the laser-light ranging is performed as a parameter.

When using the three-dimensional laser-light-scanning device described above, since the control unit controls the first drive unit and the second drive unit to change a direction in which laser light of the reflection mirror is reflected, and controls the laser-light-ranging device to perform laser-light ranging, the three-dimensional scanning range by laser-light irradiation is wide, and moreover, by reducing a frequency of laser-light irradiation in a predetermined scanning range and perform scanning with a latitude θ1 (0° ≤ θ1 ≤ 90°) of the virtual spherical surface where the laser-light ranging is performed as a parameter, it is possible to reduce the energy irradiation density of a high energy irradiation density region having a high laser-light output per unit area to ensure the performance such as ranging distance and accuracy while satisfying safety standards.

Regarding the density of the point group, the high energy irradiation density region is originally high in the point group. Therefore, the point group obtained by the scanning method proposed in the present invention can be made more uniform and the data amount of the point group itself can be reduced.

In a scanning direction of laser light approaching a north pole from an equator of the virtual spherical surface, a latitude θ1 of the virtual spherical surface where the laser-light-ranging device performs laser-light ranging may be scanned by reducing a frequency of laser-light irradiation at a rate of once in n times (n = 1/cos θ 1) in a predetermined angle range, and a value of a frequency n may be increased as laser light gets closer to a north pole.

Thus, although as the latitude of the virtual spherical surface becomes higher in the north latitude direction from the equator, the intervals between scanning trajectories adjacent to each other in the meridian direction (east-west direction) narrows, and a high density energy region is generated in the vicinity of the north pole, the latitude θ1 of the virtual spherical surface where laser-light ranging is performed is scanned by reducing the frequency of laser-light irradiation at a rate of once in n times (n = 1/cosθ1: 0° ≤ θ1 < 90°) in a predetermined angle range, and the value of the frequency n is increased as laser light gets closer to the north pole, whereby it is possible to reduce the energy density of the high density energy region, and it is possible to enhance the performance such as ranging distance and ranging accuracy by irradiating high output laser light within the safety standards. Since cos 90° is zero at the north pole, the value of n is preferably determined to be any value in accordance with an increase in energy density due to laser-light irradiation.

The embodiments described below further include the following configuration.

A three-dimensional laser-light-scanning device, including a laser-light-ranging device that performs ranging by irradiating laser light and receiving reflected light, a reflection mirror that reflects laser light irradiated from the laser-light-ranging device on a reflection surface, irradiates the laser light toward an irradiated object, reflects reflected light from an irradiated object on the reflection surface, and receives the reflected light, a first drive unit that rotationally drives the reflection mirror about a horizontal rotation axis, a rotation support unit that supports and fixes the laser-light-ranging device and the first drive unit, a second drive unit that rotationally drives the rotation support unit about a vertical axis, and a control unit that integrally controls the laser-light-ranging device, the first drive unit, and the second drive unit, in which by driving and controlling the first drive unit and the second drive unit to change a direction in which laser light of the reflection mirror is reflected, and causing the laser-light-ranging device to perform laser-light ranging, the control unit controls the laser-light-ranging device so as to cause that the laser-light-ranging device to perform, in a certain pattern, laser-light ranging on a virtual spherical surface of a virtual sphere of an any radius about the reflection mirror, and to reduce a frequency of laser-light irradiation in a predetermined scanning range and perform scanning with a latitude θ1 (0° ≤ θ1 ≤ 90°) and a longitude θ2 (0° ≤ θ2 ≤ 360°) of the virtual spherical surface where the laser-light ranging is performed as parameters.

When using the three-dimensional laser-light-scanning device described above, since the control unit controls the first drive unit and the second drive unit to change a direction in which laser light of the reflection mirror is reflected, and controls the laser-light-ranging device to perform laser-light ranging, the three-dimensional scanning range by laser-light irradiation is wide, and moreover, by reducing a frequency of laser-light irradiation in a predetermined scanning range and perform scanning with a latitude θ1 (0° ≤ θ1 ≤ 90°) and a longitude θ2 (0° ≤ θ2 ≤ 360°) of the virtual spherical surface where the laser-light ranging is performed as parameters, it is possible to reduce the energy irradiation density of a high energy irradiation density region having a high laser-light output per unit area to ensure the performance such as ranging distance and accuracy while satisfying safety standards.

In a scanning direction of laser light approaching a north pole from an equator of the virtual sphere, a latitude θ1 of the virtual sphere where the laser-light-ranging device performs the laser-light ranging may be scanned by reducing a frequency of laser-light irradiation to a rate of once in n times (n = 1/cosθ1: 0° ≤ θ1 < 90°) in a predetermined angle range, and a value of a frequency n may be increased as laser light gets closer to a north pole.

Thus, scanning is performed with ranging intervals in the longitudinal direction where the latitude θ1 of the virtual spherical surface where laser-light ranging is performed is within a predetermined angle range, and scanning is performed so that the ranging intervals of the virtual spherical surface in the longitudinal direction becomes longer as it approaches the north pole, whereby it is possible to eliminate the generation of a high density energy region, and it is possible to ensure performance such as ranging distance and accuracy while satisfying safety standards.

It is controlled so that laser-light irradiation by the three-dimensional laser-light-ranging device is not performed in a predetermined angle range of the southern hemisphere (0 degrees to 90 degrees south latitude) of the virtual spherical surface.

First, it is impossible to perform full-circumference scanning in the vertical direction due to the structural restriction of the three-dimensional laser-light-ranging device. This is because since constituent members are disposed in the gravity direction in general, it is impossible, in a region of high southern latitude on the virtual spherical surface, to perform laser-light ranging due to the constituent members shielding the region.

It is also because since the three-dimensional laser-light-ranging device is installed on a pedestal such as a tripod, it becomes impossible, similarly in a region of high southern latitude on the virtual spherical surface, to perform laser-light ranging due to the pedestal shielding the region.

Therefore, it is assumed that thinning of laser-light ranging in the present invention is applied only to the northern hemisphere of the virtual spherical surface and not to the southern hemisphere. θ1 is in the range of 0 to 90°, which means 0 degrees to 90 degrees north latitude.

In the case where the influence of laser light being shielded described above can be avoided, the thinning of the laser-light ranging similar to that in the northern hemisphere may be performed also in the southern hemisphere where necessary.

### EFFECTS OF THE INVENTION

It is possible to stably exhibit high laser-light ranging performance while reducing the energy density of a high density irradiation region where a three-dimensional scanning range by laser-light irradiation is wide and intervals between scanning lines are narrowed.

### BRIEF DESCRIPTION OF THE DRAWINGS

Fig. 1 is a front view illustrating an outline of a device of the present invention.
Fig. 2 is a perspective view illustrating an outline of the device of the present invention.
Fig. 3 is an explanatory view illustrating a virtual spherical surface formed by a rotational scanning line of laser light irradiated by a three-dimensional laser-light-scanning device.
Fig. 4 is a development view illustrating the latitude and longitude of a scanning line scanning on the virtual spherical surface of Fig. 3.
Fig. 5 is a conceptual view of a ranging point illustrating an example of thinning scanning.
Fig. 6 is a conceptual view of a ranging point illustrating another example of thinning scanning.

### EMBODIMENTS OF THE INVENTION

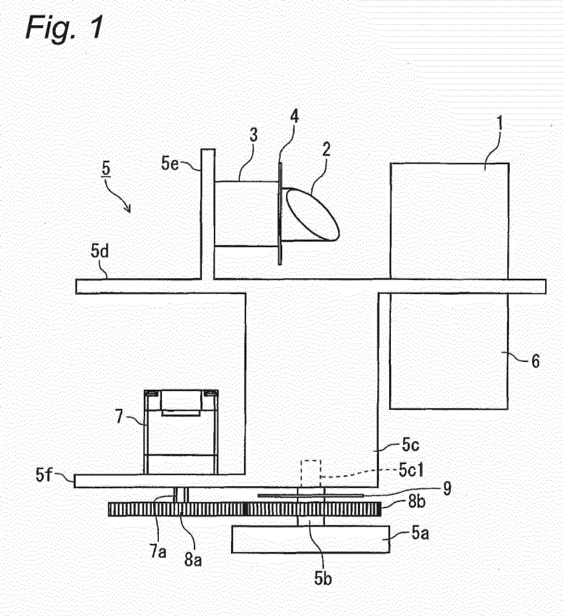

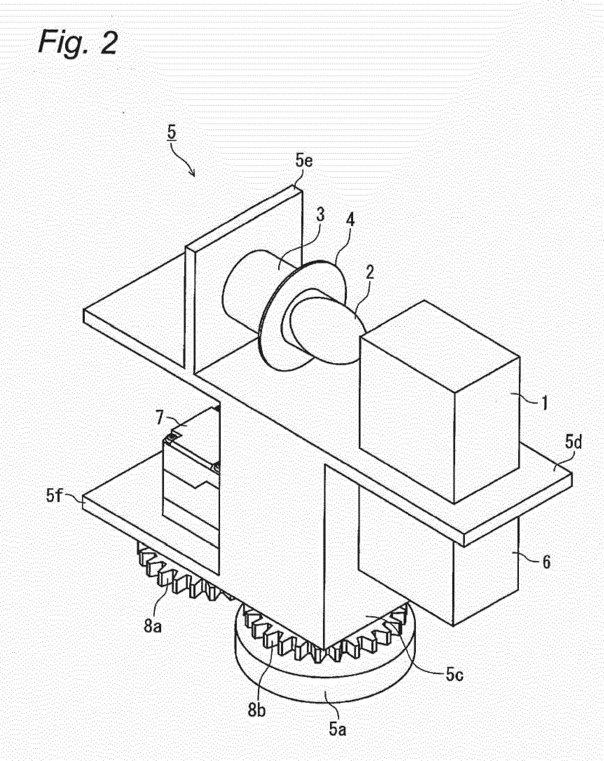

A schematic configuration of a three-dimensional laser-light-scanning device will be described below with reference to Figs. 1 and 2. Fig. 1 is a front view of the three-dimensional laser-light-scanning device, and Fig. 2 is a perspective view thereof.

In Figs. 1 and 2, a laser measurement unit 1 (laser-light-ranging device) emits laser light, irradiates a ranging target, receives laser light reflected from the ranging target, thereby measuring a linear distance between the laser measurement unit 1 and the ranging target.

Specifically, the laser light emitted by the laser measurement unit 1 is once applied to a reflection mirror 2, and is irradiated toward the ranging target by using reflection on the mirror surface. A rod mirror is preferably used as the reflection mirror 2, in which a cylindrical material (glass or the like) is cut obliquely and silver or the like is vapor-deposited on the cut plane. Other than vapor deposition, the mirror itself may be attached to the cut plane. In the present embodiment, the center axis and the cut plane of the cylinder have an inclination angle of 45 degrees.

The reflection mirror 2 is rotatably supported by a mirror drive motor 3 (first drive unit) about a center axis (horizontal rotation axis) of the cylinder. Thus, by being reflected on the mirror surface, the laser light from the laser measurement unit 1 is deflected in the direction of 90 degrees from the center axis (horizontal rotation axis) of the cylinder. By the rotation of the reflection mirror 2, the laser light of ranging is irradiated omnidirectionally in the vertical direction. A mirror encoder 4 is for detecting the angle of rotation of the reflection mirror 2 by the mirror drive motor 3.

The laser measurement unit 1 and the mirror drive motor 3 are supported and fixed on a rotation support base 5 (rotation support unit). The rotation support base 5 has a support leg 5a mounted and fixed on an installation surface, and a fixed shaft 5b uprightly formed on the support leg 5a. A support base body 5c is rotatably supported to the fixed shaft 5b via a bearing 5cl. An upper end portion of the support base body 5c is provided with an upper support plate 5d protruding outward from the support base body 5c in a direction orthogonal to the fixed shaft 5b. The laser measurement unit 1 and a control unit 6 are supported on the upper support plate 5d. An upright plate 5e is uprightly formed on the upper support plate 5d, and the mirror drive motor 3 is supported and fixed to the upright plate 5e.

A lower end portion of the support base body 5c is provided with a lower support plate 5f protruding outward from the support base body 5c in a direction orthogonal to the fixed shaft 5b. On the lower support plate 5f, a spindle drive motor 7 (second drive unit) is supported and fixed with a motor shaft 7a downward. The motor shaft 7a is integrally provided with a motor gear 8a. The motor gear 8a is engaged with a fixed gear 8b integrally assembled to the fixed shaft 5b. The fixed shaft 5b is provided with a spindle encoder 9. The spindle encoder 9 is for detecting an angle of rotation of the support base body 5c by the spindle drive motor 7.

The control unit 6 integrally controls the operations of the laser measurement unit 1, the mirror drive motor 3, and the spindle drive motor 7. The control unit 6 acquires rotation information of the mirror drive motor 3 from the mirror encoder 4 and acquires rotation information of the spindle drive motor 7 from the spindle encoder 9, and controls rotation drive of them.

When the spindle drive motor 7 is driven to rotate, the motor gear 8a provided on the motor shaft 7a rotates. The motor gear 8a revolves while engaging with the fixed gear 8b provided on the fixed shaft 5b. This causes the support base body 5c to rotate about the fixed shaft 5b via the bearing 5cl. Therefore, the rotation support base 5 rotates, and hence the laser measurement unit 1 and the reflection mirror 2 assembled to the rotation support base 5 also rotate about the fixed shaft 5b.

Thus, the laser light emitted by the laser measurement unit 1 is deflected by the reflection mirror 2 in the direction perpendicular to the laser-light irradiation direction and rotated about the horizontal rotation axis to irradiate the entire circumference in the vertical direction, and the laser measurement unit 1 and the reflection mirror 2 rotate about the fixed shaft 5b together with the rotation support base 5, thereby realizing three-dimensional laser-light scanning.

It is preferable that the laser measurement unit 1, the mirror drive motor 3, the control unit 6, and the spindle drive motor 7 are assembled to the rotation support base 5 in consideration of the rotation balance of the rotation support base 5 about the fixed shaft 5b. In the present embodiment, the weight balance is adjusted by the laser measurement unit 1 and the control unit 6 as well as the mirror drive motor 3 and the spindle drive motor 7.

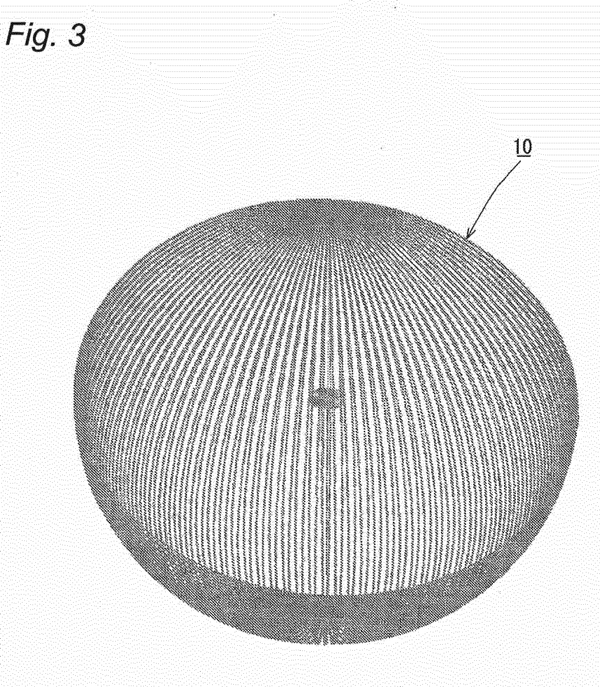

Fig. 3 conceptually illustrates how the ranging laser light is irradiated on a surface (hereinafter referred to as a "virtual spherical surface 10") of the virtual sphere if a transparent sphere of any radius exists virtually around the three-dimensional laser-light-scanning device. That is, Fig. 3 is an image showing the reflection mirror 2 moving in a certain pattern by combining the rotations of the mirror drive motor 3 and the spindle drive motor 7 and how the direction of the reflection surface changes, and what pattern the scanning line draws on the virtual spherical surface 10 as a result of the laser light emitted by the laser measurement unit 1 being reflected by the reflection mirror 2.

In the present embodiment, the mass of the rotation support base 5 is larger than the mass of the reflection mirror 2, and hence the rotation speed of the mirror drive motor 3 is made to become substantially higher than the rotation speed of the spindle drive motor 7. Therefore, the laser light plotted on the virtual spherical surface 10 becomes dense in the latitude (up-down) direction and coarse in the longitude (horizontal) direction. In this scanning pattern, the density of points irradiated with the laser light becomes high near the north pole of the virtual spherical surface 10. The high density irradiation region corresponds to the vicinity of the north pole of the virtual spherical surface 10. Theoretically, a high density irradiation region where the density of points irradiated with the laser light is high is similarly generated also near the south pole of the virtual spherical surface 10, but as described above, since the reflected light of the reflection mirror 2 is shielded by the rotation support base 5, the description mainly regarding the vicinity of the north pole will be given.

Then, scanning to reduce the frequency of laser-light irradiation is performed in a predetermined scanning range with the latitude θ1 (0° ≤ θ1 ≤ 90°) and the longitude θ2 (0° ≤ θ2 ≤ 360°) of the scanning point on the virtual spherical surface 10 of the laser light irradiated from the laser measurement unit 1 as parameters. In particular, since the higher the latitude of the scanning point of laser light becomes, the higher the density of the irradiation region becomes, it is necessary to perform scanning to reduce the frequency of laser-light irradiation. If the change of the longitude θ2 is constant, the laser light can be irradiated with only the latitude θ1 of the scanning point as a parameter.

An example of scanning (hereinafter referred to as "thinning scanning") to reduce the frequency of laser-light irradiation of the laser measurement unit 1 will be described below. When irradiating the vicinity of the north pole of the virtual spherical surface 10 with laser light, thinning scanning is realized by reducing the frequency of the laser-light ranging operation in accordance with an increase in latitude detected by the mirror encoder 4. That is, the laser-light irradiation energy density in the high density irradiation region can be reduced to 1/n by performing scanning by reducing the frequency of laser-light irradiation to a rate of once in n times (n = 1/cosθ1: 0° ≤ θ1 ≤ 90°) in a predetermined angle range of the latitude θ1.

A thinning scanning method will be described in more detail.

As shown in Figs. 1 and 2, the three-dimensional laser-light-scanning device has the laser measurement unit 1. The laser measurement unit 1 continuously performs laser-light ranging at certain time intervals. Therefore, laser light is irradiated to the surrounding three-dimensional space by the cooperation of the reflection mirror 2 driven to rotate by the mirror drive motor 3 and the rotation support base 5 driven to rotate by the spindle drive motor 7. As shown in Fig. 3, the irradiated laser light is visualized as a set of certain scanning points on the virtual spherical surface 10. In Fig. 3, a surrounding object is omitted, but in practice, the laser measurement unit 1 measures a linear distance from the center of the virtual spherical surface 10 to the object, and the control unit 6 calculates a polar coordinate value on the basis of the linear distance and outputs of the mirror encoder 4 and the spindle encoder 9, and performs this a plurality of times to generate point cloud data.

As described above, since the vicinity of the north pole of the virtual spherical surface 10 becomes a high density irradiation region, the energy density can be reduced by gradually decreasing the ratio of laser-light ranging as the latitude where laser-light ranging is performed increases (= gets closer to the north pole). Assuming that the latitude above the equator is the north latitude, control is performed so that, for example, thinning scanning is not performed at 0 degrees to 60 degrees north latitude, thinning scanning to 1/2 is performed (laser-light ranging is performed at the rate of once in 2 times) at 60 degrees to 75 degrees north latitude, and thinning scanning to 1/4 is performed (laser-light ranging is performed at the rate of once in 4 times) at 75 degrees to 90 degrees north latitude. This reduces the energy density near the pole to 1/4. Since the reduction of the point group density by the thinning scanning does not fall below the point group density near the equator, it is possible to obtain a point group having a more uniform density.

As a different method, the laser-light ranging itself in the latitudinal direction may not be performed when the latitude reaches a certain latitude rather than thinning the laser-light ranging operation of the latitude line (up-down direction). When the mirror drive motor 3 makes one rotation, the trajectory of the laser-light scanning line passes through the north pole of the virtual spherical surface 10 once, and it is assumed that the spindle drive motor 7 is rotationally controlled so as to rotate by 1 degree of the longitude of the equator of the virtual spherical surface 10 during that time. Therefore, the trajectory of the point in the latitudinal direction of the laser-light ranging is not exactly parallel with the latitude line. For convenience of explanation, laser-light ranging is expressed by the latitude θ1 and the longitude 82 when the virtual spherical surface 10 and the trajectory of the scanning line intersect with each other. In the trajectory in the latitudinal direction intersecting with 0 degrees east longitude on the equator of the virtual spherical surface 10, laser-light ranging is performed at 0 degrees to 90 degrees north latitude (no thinning). In the trajectory in the latitudinal direction intersecting with the meridian of 1 degree east longitude on the equator of the virtual spherical surface, laser-light ranging is performed at 0 degrees to 60 degrees north latitude (no thinning) and laser-light ranging is not performed at 60 degrees to 90 degrees north latitude (thinning). In the trajectory in the latitudinal direction intersecting with 2 degrees east longitude on the equator of the virtual spherical surface 10, laser-light ranging is performed at 0 degrees to 75 degrees north latitude (no thinning) and laser-light ranging is not performed at 75 degrees to 90 degrees north latitude (thinning). In the trajectory in the latitudinal direction intersecting with 3 degrees east longitude on the equator of the virtual spherical surface 10, laser-light ranging is performed at 0 degrees to 60 degrees north latitude (no thinning) and laser-light ranging is not performed at 60 degrees to 90 degrees north latitude (thinning). Such control is repeated every 4 degrees of longitude. This causes laser-light ranging in the meridian direction to be thinned to 1/4 at 75 to 90 degrees north latitude, and laser-light ranging in the meridian direction to be thinned to 1/2 at 60 to 75 degrees north latitude.

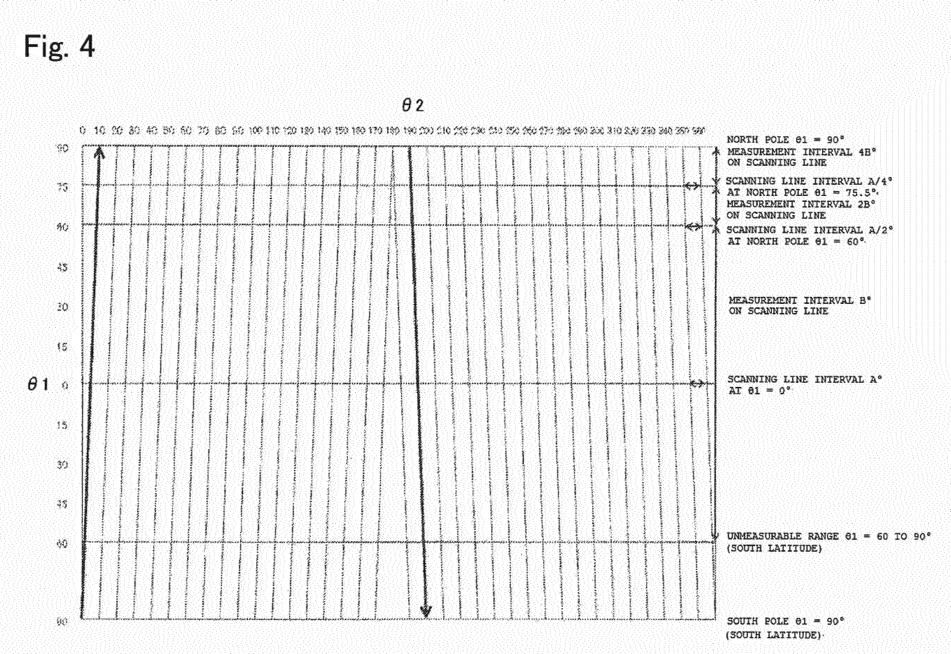

Hereinafter, a thinning scanning example will be described with reference to a latitude and longitude development view of the scanning line shown in Fig. 4. In Fig. 4, the vertical axis represents the latitude θ1 with the north pole at 90 degrees and the equator at 0 degrees. The horizontal axis indicates the longitude θ2, and indicates 0 degrees east longitude to 360 degrees east longitude (one lap) by a constant angle of 10 degrees. It is assumed that the vertical axis rotates by 180 degrees (from the south pole to the north pole while the horizontal optical axis (indicating the laser-light irradiation direction) of the laser measurement unit 1 rotates by a rotation angle of A degrees (10 degrees). Although not illustrated, it is assumed that point cloud data is obtained by performing ranging the scanning line at intervals of B degrees.

For example, the leftmost scan line indicated by the oblique line in Fig. 4 extends from the south pole (90 degrees south latitude, 0 degrees east longitude) through the equator (0 degrees north latitude, 5 degrees east longitude) to the north pole (90 degrees north latitude, 10 degrees east longitude). Then, the scanning continues to the opposite side. The north pole (90 degrees north latitude, 10 degrees east longitude) at this time becomes 90 degrees north latitude and 170 degrees west longitude (= 190 degrees east longitude) when reaching the opposite side, passes through the equator (0 degrees north latitude, 165 degrees west longitude = 195 degrees east longitude), and becomes the south pole (90 degrees south latitude, 160 degrees west longitude = 200 degrees east longitude). The full-circumference scanning is performed by repeating the scanning until the scanning line rotates by 360 degrees. A region where laser-light irradiation is high in density originally exists also on the south pole side, but as described above, only the northern hemisphere region is targeted for thinning scanning.

In Fig. 4, the latitude from the north pole to the south pole via the equator is expressed as 90 degrees → 0 degrees → 90 degrees, where θ1 is in the range of 0 to 90° (north pole = 90°, equator = 0°).

The laser measurement unit 1 performs ranging by continuously irradiating laser light at a certain cycle (e.g., 10 µsec for one ranging). This cycle is basically a fixed value, not a kind of value that can be dynamically changed, but an eigenvalue specific to the system. Therefore, if the rotation of the laser measurement unit 1 in the vertical direction and the horizontal direction has a constant angular velocity, the point where ranging is performed draws a specific pattern on the virtual spherical surface 10 (See Fig. 3).

In Fig. 4, B degrees represents the difference between the latitude θ1 at a certain point and the latitude θ 1 at the next point when ranging is continuously performed in the above cycle. The "measurement interval 4B on the scanning line θ1 = 90°" in the vicinity of the north pole of the virtual spherical surface 10 means that the ranging is performed at intervals of 4B degrees (= thinning to 1/4), where the ranging is normally performed at intervals of B degrees in the latitudinal direction.

Thus, the higher the latitude θ1 becomes (= the closer it gets to the north pole), the more the actual distance decreases even at the same A degrees on the meridian (horizontal direction). Scanning lines in the latitudinal direction (vertical direction) are thinned in accordance with the degree of decrease in the meridian direction. Assuming that the latitude of the virtual spherical surface 10 where laser-light ranging is performed is θ1 (0° ≤ θ1 < 90°), the laser measurement unit 1 performs thinning of the ranging operation at every n times (n = 1/cosθ1) in the latitude θ1.

Specifically, the angle corresponding to the A degrees described above indicates the interval in the longitude (= horizontal direction) where the trajectory of the scanning line intersects with the equator. Since it is cos60° = 0.5 where the distance on the meridian on the virtual spherical surface 10 becomes half as compared with the length on the equator without changing the A degrees, the length on the meridian becomes half the length on the equator at 60 degrees north latitude with the equator as 0 degrees north latitude. If thinning is defined by an expression of once in n times, n = 1/cos(θ1) = 1/cos60° = 2 times becomes true. Therefore, at 60 degrees north latitude, the ranging operation is thinned at a rate of once in 2 times.

Similarly, since cos75.52° = 0.25, at 75.5 degrees north latitude, the length of the meridian becomes 1/4 of the length on the equator. Therefore, n = 1/cos(θ1) = 1/cos75.52° = 4 times becomes true. Therefore, at 75.52 degrees north latitude, the thinning scanning is performed at a rate of once in 4 times. At the north pole of the virtual spherical surface 10, cos 90° is zero, and hence it is assumed that thinning scanning is performed by N times (N is a natural number) of the full-circumference scanning without being substituted into the above equation.

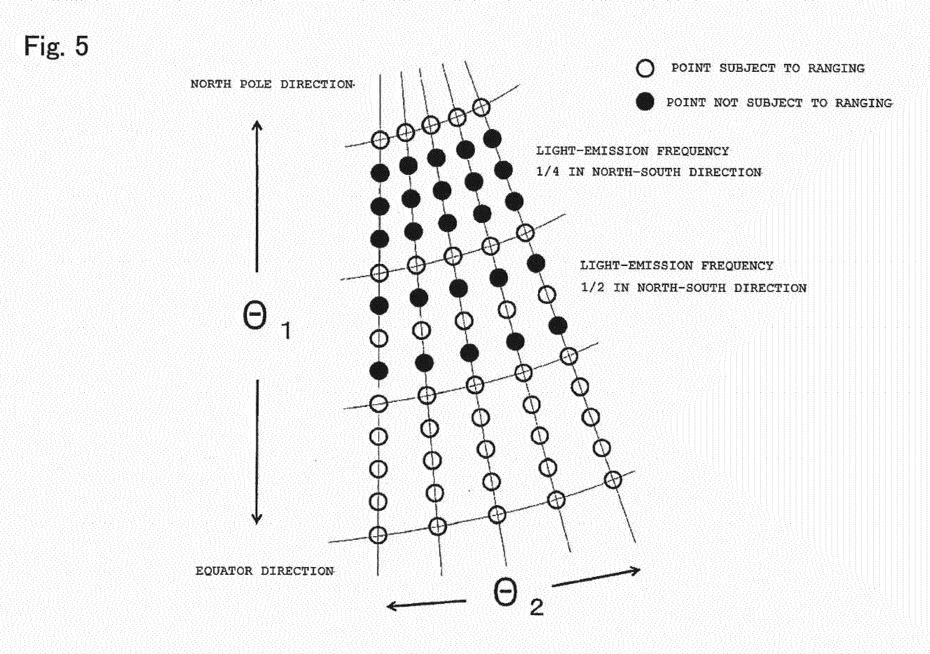

Subsequently, a specific image of the thinning scanning will be described with reference to Fig. 5 as an example.

Fig. 5 presents the concept of thinning scanning of a part of the northern hemisphere of the virtual spherical surface 10. 91 indicates a latitudinal (north-south) direction of the virtual spherical surface 10, and θ2 indicates a meridian (east-west) direction of the virtual spherical surface 10. There are three divided regions in the north-south direction, which are "no thinning", "light-emission frequency 1/2", and "light-emission frequency 1/4" in order from the south.

In the no thinning region, thinning scanning is not performed, and corresponds to θ1 = 0 to 60° described above. The light-emission frequency 1/2 region corresponds to θ1 = 60 to 75.5° described above, and when applied to n = 1/cosθ1, it becomes n = 2, and ranging is performed at a frequency of once in 2 times. The light-emission frequency 1/4 region corresponds to θ1 = 75.5 to 90° described above, and when applied to n = 1/cosθ1, it becomes n = 4, and ranging is performed at a frequency of once in 4 times.

Fig. 5 is a conceptual view for explaining the image of thinning scanning, and in reality, many thinning scanning are performed in each region.

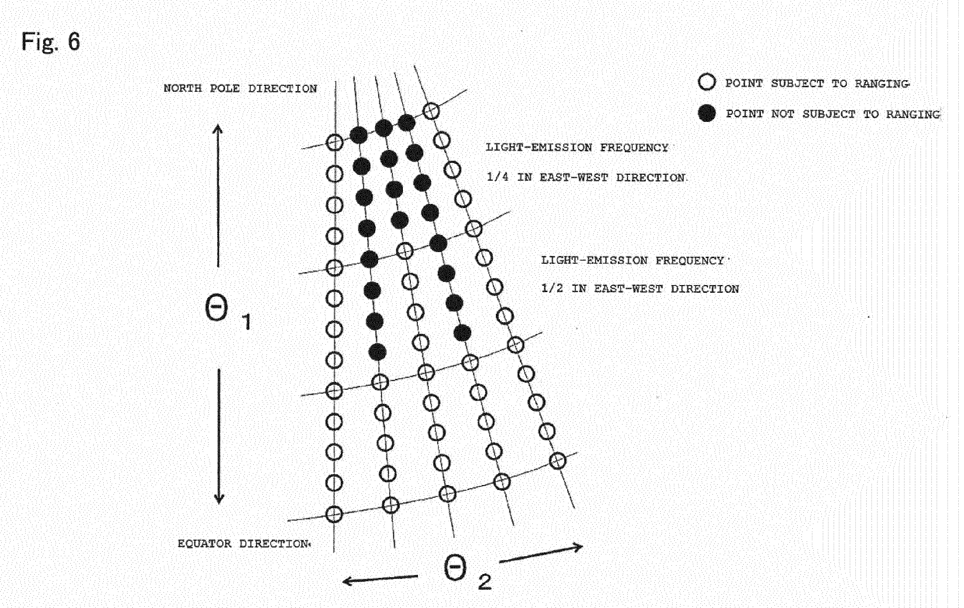

Fig. 6 explains another example of a specific image of thinning scanning.

Similarly to Fig. 5, Fig. 6 presents the concept of thinning scanning of a part of the northern hemisphere of the virtual spherical surface 10, but is an example of thinning scanning different from that in Fig. 5.

θ1 indicates a latitudinal (north-south) direction of the virtual spherical surface 10, and θ2 indicates a meridian (east-west) direction of the virtual spherical surface 10. There are three divided regions in the north-south direction, which are "no thinning", "light-emission frequency 1/2", and "light-emission frequency 1/4" in order from the south. Unlike Fig. 5, Fig. 6 shows the emission frequency in the east-west direction.

In the no thinning region, thinning scanning is not performed, and corresponds to θ1 = 0 to 60° described above. The light-emission frequency 1/2 region corresponds to θ1 = 60 to 75.5° described above, and when applied to n = 1/cosθ1, it becomes n = 2, and ranging is performed so as to be at a frequency of once in 2 times in the east-west direction. The light-emission frequency 1/4 region corresponds to θ1 = 75.5 to 90° described above, and when applied to n = 1/cosθ1, it becomes n = 4, and ranging is performed so as to be at a frequency of once in 4 times in the east-west direction.

Fig. 6 is a conceptual view for explaining the image of thinning scanning, and in reality, many thinning scanning are performed in each region.

The above-mentioned 60° north latitude and 75.5° north latitude are examples, and the region of 75.5 degrees north latitude or higher near the north pole may be further subdivided to obtain the angle cosθ1 = 1/8 or 1/16, the thinning amount in the very vicinity of the pole of the measurement point may be increased, and the energy density in the high energy irradiation density region may become 1/8 or 1/16.

The three-dimensional laser-light-scanning device in which the rotation of the mirror drive motor 3 is fast and the rotation of the spindle drive motor 7 is slow has been described above. However, the relationship in rotation speed between the mirror drive motor 3 and the spindle drive motor 7 may be reversed (case where the rotation of the mirror drive motor 3 is slow and the rotation of the spindle drive motor 7 is fast). Also in this case, a high density irradiation region is generated similarly in the vicinity of the north pole of the virtual spherical surface 10, the above idea may be applied to perform thinning scanning.

Use of the three-dimensional laser-light-scanning device described above allows the energy density in a high density region where the laser-light irradiation density becomes high to be reduced, and hence measurement can be performed with a higher laser-light output within the similar safety standards. For this reason, it is possible to provide the three-dimensional laser-light-scanning device in which performance such as distance and accuracy of laser-light ranging is secured. Therefore, it is possible to realize high practicality and energy saving while complying with the safety standards of the three-dimensional laser-light-scanning device.

## Claims

1. A three-dimensional laser-light-scanning device, comprising:
a laser-light-ranging device that performs ranging by irradiating laser light and receiving reflected light;
a reflection mirror that reflects laser light irradiated from the laser-light-ranging device on a reflection surface, irradiates the laser light toward an irradiated object, reflects reflected light from an irradiated object on the reflection surface, and receives the reflected light;
a first drive unit that rotationally drives the reflection mirror about a horizontal rotation axis;
a rotation support unit that supports and fixes the laser-light-ranging device and the first drive unit;
a second drive unit that rotationally drives the rotation support unit about a vertical axis; and
a control unit that integrally controls the laser-light-ranging device, the first drive unit, and the second drive unit, wherein
by driving and controlling the first drive unit and the second drive unit to change a direction in which laser light of the reflection mirror is reflected, and causing the laser-light-ranging device to perform laser-light ranging, the control unit controls the laser-light-ranging device so as to cause that the laser-light-ranging device to perform, in a certain pattern, laser-light ranging on a virtual spherical surface of a virtual sphere of an any radius about the reflection mirror, and to reduce a frequency of laser-light irradiation in a predetermined scanning range and perform scanning with a latitude θ1 (0° ≤ θ1 ≤ 90°) of the virtual spherical surface where the laser-light ranging is performed as a parameter.

2. The three-dimensional laser-light-scanning device according to claim 1, wherein in a scanning direction of laser light approaching a north pole from an equator of the virtual spherical surface, a latitude θ1 of the virtual spherical surface where the laser-light-ranging device performs laser-light ranging may be scanned by reducing a frequency of laser-light irradiation at a rate of once in n times (n = 1/cosθ1) in a predetermined angle range, and a value of a frequency n may be increased as laser light gets closer to a north pole.

3. A three-dimensional laser-light-scanning device, comprising:
a laser-light-ranging device that performs ranging by irradiating laser light and receiving reflected light;
a reflection mirror that reflects laser light irradiated from the laser-light-ranging device on a reflection surface, irradiates the laser light toward an irradiated object, reflects reflected light from an irradiated object on the reflection surface, and receives the reflected light;
a first drive unit that rotationally drives the reflection mirror about a horizontal rotation axis;
a rotation support unit that supports and fixes the laser-light-ranging device and the first drive unit;
a second drive unit that rotationally drives the rotation support unit about a vertical axis; and
a control unit that integrally controls the laser-light-ranging device, the first drive unit, and the second drive unit, wherein
by driving and controlling the first drive unit and the second drive unit to change a direction in which laser light of the reflection mirror is reflected, and causing the laser-light-ranging device to perform laser-light ranging, the control unit controls the laser-light-ranging device so as to cause that the laser-light-ranging device to perform, in a certain pattern, laser-light ranging on a virtual spherical surface of a virtual sphere of an any radius about the reflection mirror, and to reduce a frequency of laser-light irradiation in a predetermined scanning range and perform scanning with a latitude θ1 (0° ≤ θ1 ≤ 90°) and a longitude θ2 (0° ≤ θ2 ≤ 360°) of the virtual spherical surface where the laser-light ranging is performed as parameters.

4. The three-dimensional laser-light-scanning device according to claim 1, wherein in a scanning direction of laser light approaching a north pole from an equator of the virtual sphere, a latitude 91 of the virtual sphere where the laser-light-ranging device performs the laser-light ranging may be scanned by reducing a frequency of laser-light irradiation at a rate of once in n times (n = 1/cosθ1: 0° ≤ θ1 < 90°) in a predetermined angle range, and a value of a frequency n may be increased as laser light gets closer to a north pole.
